# EUROPÄISCHE PATENTSCHRIFT

(11) **EP 2 546 047 B1**
(45) Veröffentlichungstag und Bekanntmachung des Hinweises auf die Patenterteilung: **30.04.2014**
(21) Anmeldenummer: 12170492.8
(22) Anmeldetag: 01.06.2012
(51) Int. Cl.: B29C 49/42, B29C 49/64

(54) **Vorrichtung und Verfahren zum Herstellen von Behältern**
Method and device for producing containers
Dispositif et procédé de fabrication de récipients

(30) Priorität: 15.07.2011 DE 102011079273
(43) Veröffentlichungstag der Anmeldung: 16.01.2013
(73) Patentinhaber: Krones AG, 93073 Neutraubling (DE)
(72) Erfinder: Voth, Klaus, 93083 Obertraubling (DE); Rossmann, Stefan, 93077 Bad Abbach (DE)
(74) Vertreter: Grünecker, Kinkeldey, Stockmair & Schwanhäusser

(56) Entgegenhaltungen:
- EP-A2- 2 100 712
- EP-A2- 2 208 606
- EP-A2- 2 308 667
- DE-A1-102009 044 258

## Beschreibung

Die Erfindung bezieht sich auf eine Vorrichtung und ein Verfahren zum Herstellen von Behältern.

Bei der Herstellung von Behältern in Blasmaschinen wird bei verschiedenen Verbrauchern (Verbrauchsstellen) Wärmeenergie benötigt. So müssen beispielsweise Vorformlinge, sogenannte Preforms, vor dem Blasen zu fertigen Behältern mittels Temperiereinrichtungen vorgewärmt werden. Auf der anderen Seite sind Drucklufterzeuger notwendig, die Abwärme erzeugen, die abgeführt werden muss, um eine korrekte Funktion der Druckerzeuger zu gewährleisten.

Bislang werden die Kühlanlagen von Kompressoren oder der Streckblasmaschine sowie die Temperiergeräte der Streckblasmaschine separat betrieben. Alle arbeiten eigenständig.

So zeigt beispielsweise die DE 10 2009 044 258 A1 eine Anlage und ein Verfahren zur Herstellung, Abfüllung und Verpackung und/oder zum Transport von Getränken. Diese Anlage verfügt über mehrere Anlagenteile, die zumindest teilweise über eine Steuerung und insbesondere energetisch miteinander gekoppelt sind. So entsteht ein miteinander gekoppeltes Energiewandlungs-, Speicher- oder Verbrauchssystem, wobei dieses von einer gemeinsamen Energieerzeugungseinheit gespeist wird. Diese liefert mechanische Wellenenergie oder elektrische oder thermische Energie.

Weiterhin zeigt die EP 2 208 606 A2 eine Streckblasmaschine mit beheizbaren Blasformen. Dabei sind Blasformen innerhalb eines Formträgers angeordnet und verfügen über wenigstens eine Seitenwand und einen Boden, wogegen die Preforms expandieren können. Dabei ist ein erster Flüssigkeitskreislauf vorgesehen, der die Seitenwand temperiert und ein weiterer Flüssigkeitskreislauf, der den Boden temperiert, wobei in wenigstens einem dieser Kreisläufe eine Heizeinrichtung vorgesehen ist, womit die Flüssigkeit erwärmt wird. Weiterhin ist wenigstens ein Wärmetauscher vorgesehen, der zumindest zeitweise Wärme von einem Flüssigkeitskreislauf auf den anderen Flüssigkeitskreislauf übertragen kann.

Weiterhin zeigt die EP 2 308 667 A2 eine Blasmaschine, wobei die umzuformenden Kunststoff-Vorformlinge mit einem Gas beaufschlagt werden, wodurch sie zu Kunststoffbehältnissen expandiert werden. Die Vorrichtung weist eine Kühleinrichtung auf, die zur Kühlung wenigstens eines Bereichs der Vorrichtung dient. Dazu umfasst die Kühleinrichtung wenigstens eine wärmegespeiste Kältemaschine.

Darüber hinaus zeigt die EP 2 100 712 A2 eine Vorrichtung zum Erwärmen von Behältnissen, wie beispielsweise Vorformlingen, mit einer Mikrowellenerwärmungseinrichtung, die einen Mikrowellenerzeuger und einen Mikrowellenleiter umfasst und mit einer Transporteinrichtung für die Behältnisse ausgestattet ist. Weiterhin ist eine zusätzliche Erwärmungseinrichtung vorgesehen, die die Behältnisse erwärmen kann, wobei es sich dabei um eine Vorwärmeinheit handelt, die in Transportrichtung der Behältnisse stromaufwärts bezüglich der Mikrowellenerwärmungseinrichtung angeordnet ist.

Der Erfindung liegt die Aufgabe zugrunde, einen Wärmeenergieverbund zu schaffen, der Energie zum Erwärmen und Abkühlen spart.

Die Aufgabe wird durch die Vorrichtung nach Anspruch 1 und das Verfahren nach Anspruch 10 gelöst.

Durch die erfindungsgemäße Ausgestaltung ist es möglich, die einzusetzende Primärenergie zum Erwärmen und/oder Kühlen im Herstellungsprozess zu reduzieren, indem die einzelnen Verbraucher und Erzeuger von Wärmeenergie über einen Wärmeenergieverbund für ein Wärmemanagement miteinander verbunden werden, so dass Abwärme recycelt und/oder Kälte mehrfach genutzt werden kann.

Vorteilhafte Weiterbildungen der Erfindung sind den Unteransprüchen zu entnehmen.

Ausführungsbeispiele der Erfindung werden nachfolgend anhand der Zeichnungen näher erläutert. Es zeigen:
- Fig. 1: ein erstes Ausführungsbeispiel der Erfindung, und
- Fig. 2: ein zweites Ausführungsbeispiel der Erfindung.

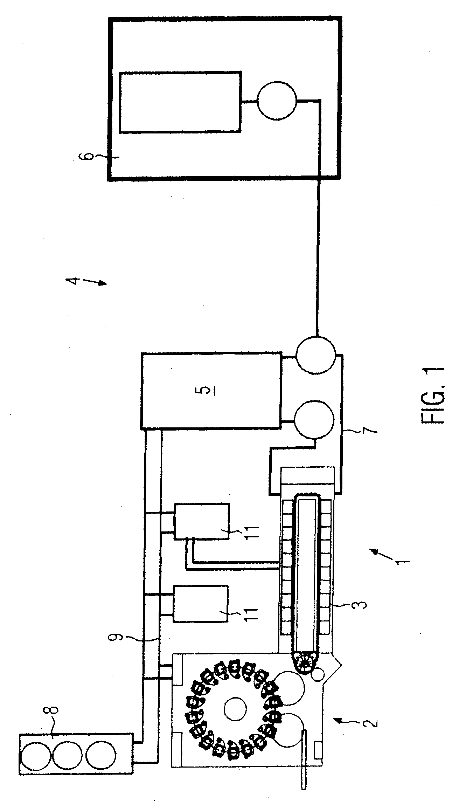

Fig. 1 zeigt in äußerst schematischer Darstellung eine Vorrichtung 1 zur Herstellung von Behältern, die im dargestellten Ausführungsbeispiel eine Streckblasanlage zum Herstellen von Kunststoffbehältern aus sogenannten Preforms ist und die eigentliche Blasmaschine 2, als Rundläufer ausgebildet, und eine Temperiervorrichtung 3 zum Vorwärmen von Preforms enthält. Sowohl die Streckblasmaschine 2 als auch die Vorwärmstrecke 3 sind üblicher Bauart und benötigen zur Erwärmung im Herstellungsprozess Primärenergie. Der Vorrichtung 1 ist weiterhin ein Drucklufterzeuger 4 zugeordnet, der im dargestellten Ausführungsbeispiel einen Kolben- oder Turbokompressor in Form eines Boosters 5 und einen Niederdruckerzeuger 6 aufweist. Beim Betrieb des Druckerzeugers 4 entsteht Abwärme, die aus der Druckerzeugung abgeführt werden muss. Erfindungsgemäß wird die Abwärme der Druckerzeugungseinrichtung 4 über einen Wärmeenergieverbund durch Wärmetauscher oder dgl. auf einen Wärmeträger übertragen, der wiederum über Leitungen 7 in die Vorwärmeinrichtung 3 der Streckblasmaschine 1 geleitet wird und dort zum Vorwärmen der Preforms verwendet wird (z.B. bei Hotfill oder einem ähnlichen Prozess).

Der Streckblasmaschine 2 ist weiterhin eine Kühleinrichtung 8 zugeordnet, die unter Einsatz von Primärenergie die fertigen Behälter kühlt. Das die Streckblasmaschine verlassende Kühlmedium, das noch Kühlkapazität aufweist, wird über eine dem Wärmeenergieverbund zuzuordnenden Leitung 9 zur Druckerzeugungseinrichtung 4 geleitet und kühlt dort das Kühlwasser des oder der Kompressoren.

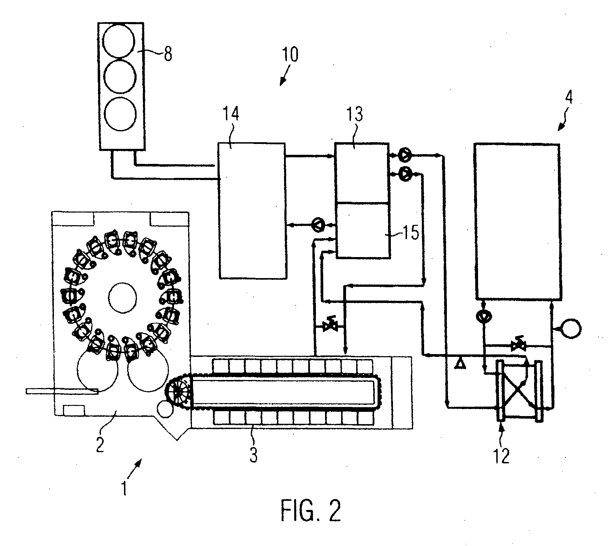

Fig. 2 zeigt ein weiteres Ausführungsbeispiel der Erfindung, das jedoch mit dem Ausführungsbeispiel nach Fig. 1 kombiniert werden kann. Auch Fig. 2 zeigt die bereits beschriebene Streckblasmaschine 2 mit der Vorwärmstrecke 3, den Drucklufterzeuger 4 und den Kühler 8. Der Kühlere 8 ist in diesem Ausführungsbeispiel Teil einer Kälteanlage 10, die unter Einsatz von Primärenergie verschiedene Verbraucher, wie beispielsweise die Streckblasmaschine 2, Temperiergeräte 11 (Fig. 1) und den Drucklufterzeuger 4 kühlt. Dargestellt ist ein Wärmetauscher 12, der das Kühlmedium für den Booster 5 beispielsweise von 30°C auf 20°C abkühlt. Das Wärmeträgermedium des Wärmetauschers 12, ebenfalls Wasser, stammt aus einem Vorratstank 13, der unter Einsatz von Primärenergie durch den Kühler 8 und einen Chiller 14 auf 10 °C gehalten wird. Nach dem Durchlaufen des Wärmetauschers 12 gelangt das Wärmeträgermedium über den Wärmeenergieverbund in einen Kühlmitteltank 15, der auf 20°C gehalten wird. Aus diesem Tank 15 wird Kühlmedium in den Chiller abgezogen und dort auf 10°C abgekühlt, wonach das Kühlmedium in den Tank 13 rückgeführt wird.

Aus dem Kühlmitteltank 13 bei 10°C wird auch Kühlmedium zum Kühlen der Temperiergeräte abgezogen, das nach dem Kühlvorgang in der Temperierstrecke 3 mit 14°C im Rahmen des Wärmeenergieverbundes wieder in den Kühlmitteltank 15 rückgeführt wird.

Im Rahmen des Wärmeenergiemanagements ist es weiterhin möglich, Radiatorkühler oder Kühltürme vorzusehen, und in einer Umgebung aufzustellen, wo sie nicht zur Erwärmung des unmittelbaren Umfeldes der Streckblasmaschine 2 oder der Vorwärmstrecke 3 führen.

Einzelne Bestandteile der erfindungsgemäßen Vorrichtung, die dem Wärmeenergieverbund zuzuordnen sind, beispielsweise die Kühlanlage nach Fig. 2, können zu einem räumlichen und funktionellen Energiemodul mit einer gemeinsamen Steuerung zusammengefasst werden, und den Verbrauchern/Erzeugern von Wärmeenergie zugeordnet werden. Damit kann beispielsweise eine Kühleinrichtung für alle Kühlzwecke eingesetzt werden, und ersetzt somit Kühleinrichtungen, die bislang jeder einzelnen Arbeitskomponente, d.h. der Streckblasmaschine 2 und der Vorwärmstrecke 3 sowie dem Drucklufterzeuger 4 beigestellt wurden. Dieses Energiemodul kann je nach Streckblasmaschinenausführung, Prozess- und Kompressorart angepasst werden.

Durch den erfindungsgemäßen Wärmeenergieverbund kann die Abwärme der Maschinen im Kühlwasser für andere interne Prozesse genutzt werden. Die dazu notwendigen maschinellen Ausrüstungen, wie beispielsweise Wärmetauscher, Kälteanlagen, Radiatorkühler und Kühltürme sind dem Fachmann bekannt und müssen nicht näher erläutert werden. Der Wärmeverbund kann, je nach Art der Produktionsanlage, die unterschiedlichsten Maschinen und Einrichtungen miteinander verbinden und ist nicht auf die speziell angeführten Beispiele beschränkt. So kann die Temperierung der Blasform, die Ofenabluftnutzung, die Kühlung Antrieb E-Recken, die Kompressorabwärme oder Blasform, Preferential Heating-Klammer, Neckplatte, Boden, Kühlung Antriebe (E-Recken, Antrieb Blasrad, Antrieb Kette), Temperierung Wasserlast bei Mikrowelle (wenn sinnvoll), Vorheizen H2O2, Temperierung Blasluft (kalt für Behälterkühlung, heiß für sterile Blasluft), Kühlung Filterschieben bei IR-Ofen, Kühlung Lampen, Oberflächenkühlung Preform, allein oder in Kombination miteinander, Teil des Wärmeenergieverbundes sein.

## Patentansprüche

1. Vorrichtung zum Herstellen von Behältern mit einer Mehrzahl von Verbrauchern/Erzeugern (2, 3, 4) von Wärmeenergie, die über einen Wärmeenergieverbund für ein Wärmemanagement miteinander verbunden sind, **dadurch gekennzeichnet, dass** der Wärmeenergieverbund Kühlwasser aus der Streckblasmaschine (2), das noch Kühlkapazität aufweist, als Kühlwasser dem Druckerzeuger (4) über eine Leitung (9) zuführen kann.

2. Vorrichtung nach Anspruch 1, **dadurch gekennzeichnet, dass** der Wärmeenergieverbund Einrichtungen zum Recyceln von Abwärme enthält.

3. Vorrichtung nach Anspruch 1 oder 2, **dadurch gekennzeichnet, dass** der Wärmeenergieverbund Einrichtungen zur Zweitnutzung von Kälte enthält.

4. Vorrichtung nach einem der Ansprüche 1 bis 3, **dadurch gekennzeichnet, dass** eine Wärmeerzeugungseinrichtung (4) mehrere Verbraucher (3) bedient.

5. Vorrichtung nach einem der Ansprüche 1 bis 4, **dadurch gekennzeichnet, dass** eine Kälteerzeugungseinrichtung (10) mehrere Verbraucher (4, 2, 3) bedient.

6. Vorrichtung nach einem der Ansprüche 1 bis 5, **dadurch gekennzeichnet, dass** der Wärmeenergieverbund Kühlwasser aus dem Druckerzeuger (4) der Streckblasmaschine (2, 3) zur Erwärmung eines Temperiermediums zuführt.

7. Vorrichtung nach einem der Ansprüche 1 bis 6, **dadurch gekennzeichnet, dass** der Wärmeenergieverbund ein Energiemodul mit einer Mehrzahl von für verschiedene Verbraucher/Erzeuger benötigten Einrichtungen enthält.

8. Vorrichtung nach einem der Ansprüche 1 bis 7, **dadurch gekennzeichnet, dass** das Energiemodul Wärmetauschereinrichtungen (12) und Kälteeinrichtungen (8, 14) umfasst.

9. Vorrichtung nach einem der Ansprüche 1 bis 8, **dadurch gekennzeichnet, dass** die Verbraucher/Erzeuger eine Streckblasmaschine und einen Kompressor enthalten.

10. Vorrichtung nach einem der Ansprüche 1 bis 9. **dadurch gekennzeichnet, dass** der Wärmeenergieverbund eine Temperierung Blasform, eine Ofenabluftnutzung, eine Kühlung Antrieb E-Recken und Kompressorabwärme umfasst.

11. Verfahren zum Herstellen von Behältern, bei dem Wärmeenergie zwischen einer Mehrzahl von Verbrauchern/Erzeugern über einen Wärmeenergieverbund ausgetauscht wird, **dadurch gekennzeichnet, dass** der Wärmeenergieverbund Kühlwasser aus der Streckblasmaschine (2), das noch Kühlkapazität aufweist, als Kühlwasser dem Druckerzeuger (4) über eine Leitung (9) zuführt.

## Claims

1. Device for the manufacture of containers, comprising a plurality of consumers/generators (2, 3, 4) of thermal energy which are connected together through a thermal energy network for thermal management, **characterised in that** the thermal energy network can feed cooling water from the stretch blow moulding machine (2), which still has cooling capacity, as cooling water to the pressure generator (4) via a conduit (9).

2. Device according to claim 1, **characterised in that** the thermal energy network contains facilities for recycling waste heat.

3. Device according to claim 1 or 2, **characterised in that** the thermal energy network contains devices for the secondary utilization of cold media.

4. Device according to any one of claims 1 to 3, **characterised in that** a heat generation device (4) serves a plurality of consumers (3).

5. Device according to any one of claims 1 to 4, **characterised in that** a cooling generation device (10) serves a plurality of consumers (4, 2, 3).

6. Device according to any one of claims 1 to 5, **characterised in that** the thermal energy network feeds cooling water from the pressure generator (4) of the stretch blow moulding machine (2, 3) for heating a temperature stabilising medium.

7. Device according to any one of claims 1 to 6, **characterised in that** the thermal energy network contains an energy module with a plurality of devices required for different consumers/generators.

8. Device according to any one of claims 1 to 7, **characterised in that** the energy module comprises heat exchanger devices (12) and cooling devices (8, 14).

9. Device according to any one of claims 1 to 8, **characterised in that** the consumers/generators include a stretch blow moulding machine and a compressor.

10. Device according to any one of claims 1 to 9, **characterised in that** the thermal energy network comprises a temperature stabilisation of a blow mould, a furnace waste air utilisation, a cooling of an electrical stretching drive and compressor waste heat.

11. Method for the manufacture of containers, in which thermal energy is exchanged between a plurality of consumers/generators via a thermal energy network, **characterised in that** the thermal energy network feeds cooling water from the stretch blow moulding machine (2), which still has cooling capacity, as cooling water to the pressure generator (4) via a conduit (9).

## Revendications

1. Dispositif pour fabriquer des récipients ou contenants, comprenant une pluralité d'éléments consommateurs / d'éléments producteurs ou générateurs (2, 3, 4) d'énergie calorifique, qui sont reliés mutuellement par l'intermédiaire d'un couplage d'énergie calorifique en vue d'une gestion de la chaleur, **caractérisé en ce que** le couplage d'énergie calorifique est en mesure d'amener de l'eau de refroidissement de la machine d'étirage-soufflage (2), qui présente encore une capacité de refroidissement, en tant qu'eau de refroidissement, au générateur de pression (4), par l'intermédiaire d'une conduite (9).

2. Dispositif selon la revendication 1, **caractérisé en ce que** le couplage d'énergie calorifique englobe des installations pour le recyclage de chaleur perdue.

3. Dispositif selon la revendication 1 ou la revendication 2, **caractérisé en ce que** le couplage d'énergie calorifique englobe des installations pour une réutilisation de froid.

4. Dispositif selon l'une des revendications 1 à 3, **caractérisé en ce qu'**une installation de production de chaleur (4) dessert plusieurs éléments consommateurs (3).

5. Dispositif selon l'une des revendications 1 à 4, **caractérisé en ce qu'**une installation de production de froid (10) dessert plusieurs éléments consommateurs (4, 2, 3).

6. Dispositif selon l'une des revendications 1 à 5, **caractérisé en ce que** couplage d'énergie calorifique amène de l'eau de refroidissement en provenance du générateur de pression (4), à la machine d'étirage-soufflage (2, 3), pour échauffer un agent destiné à tempérer.

7. Dispositif selon l'une des revendications 1 à 6, **caractérisé en ce que** le couplage d'énergie calorifique englobe un module énergétique comprenant une pluralité d'installations nécessaires à différents éléments consommateurs / éléments producteurs ou générateurs.

8. Dispositif selon l'une des revendications 1 à 7, **caractérisé en ce que** le module énergétique comprend des installations d'échange de chaleur (12) et des installations frigorigènes (8, 14).

9. Dispositif selon l'une des revendications 1 à 8, **caractérisé en ce que** les éléments consommateurs / éléments producteurs ou générateurs englobent une machine d'étirage-soufflage et un compresseur.

10. Dispositif selon l'une des revendications 1 à 9, **caractérisé en ce que** le couplage d'énergie calorifique englobe un système pour tempérer le moule de soufflage, une exploitation de l'air de sortie d'un four, un refroidissement de l'entraînement de l'étireuse d'allongement, et la récupération de chaleur perdue du compresseur.

11. Procédé pour fabriquer des récipients ou contenants, d'après lequel de l'énergie calorifique est échangée entre une pluralité d'éléments consommateurs / d'éléments producteurs, par l'intermédiaire d'un couplage d'énergie calorifique, **caractérisé en ce que** le couplage d'énergie calorifique amène de l'eau de refroidissement de la machine d'étirage-soufflage (2), qui présente encore une capacité de refroidissement, en tant qu'eau de refroidissement, au générateur de pression (4), par l'intermédiaire d'une conduite (9).
